# EUROPEAN PATENT SPECIFICATION

(11) **EP 1 428 131 B1**
(45) Date of publication and mention of the grant of the patent: **02.11.2006**
(21) Application number: 02780305.5
(22) Date of filing: 12.09.2002
(51) Int. Cl.: G06F 13/28

(54) **MULTIPLE CHANNEL INTERFACE FOR COMMUNICATIONS BETWEEN DEVICES**
MEHRKANALSCHNITTSTELLE FÜR DIE KOMMUNIKATION ZWISCHEN EINRICHTUNGEN
INTERFACE A CANAUX MULTIPLES DESTINEE AUX COMMUNICATIONS ENTRE DISPOSITIFS

(30) Priority: 21.09.2001 US 961024
(43) Date of publication of application: 16.06.2004
(73) Proprietor: INTEL CORPORATION, Santa Clara, CA 95052 (US)
(72) Inventor: MEARS, Brian, Tempe, AZ 85284 (US); FULLERTON, Mark, Austin, TX 78735 (US); KOHOUT, Nicholas, Austin, TX 78749 (US)
(74) Representative: Dunlop, Hugh Christopher
(86) International application number: PCT/US2002/029075
(87) International publication number: WO 2003/027863

(56) References cited:
- EP-A- 0 772 368
- EP-A- 1 026 593
- US-A- 5 915 127
- US-A- 6 084 934
- ANONYMOUS: "PCI to Infiniband Bridge Target Channel Adapter; Requirements" [Online] 29 June 2000 (2000-06-29) , SUN XP002220701 Retrieved from the Internet: <URL: http://www.sun.com/io_technologies/docs/PC I_TO_IB_HANDOUT1.pdf> [retrieved on 2002-11-12] page 1 -page 2
- AVERY JAMES M: "Infiniband to PCI Bridge TCA" XP002197326 page 6 -page 11; figure 8

## Description

### Field of the Invention

The present invention relates generally to communications between devices, and more particularly to a multi-channel interface for communications between devices, circuits, semiconductor chips or the like.

### Background Information

Electronic systems and devices are being required to perform more functions in shorter periods of time. Such electronic systems and devices contain multiple semiconductor chips, circuits and or the like. The semiconductor chips or circuits are typically required to communicate with each other in order to perform particular operations or functions. To accomplish these communications, multiple communications links or conductors are required to interconnect the semiconductor chips or circuits. These electrical connections can occupy considerable area on a substrate and can also require multiple pins on each of the chips for the inter-chip communications. Complex software may also be needed to implement the inter-chip or circuit communications and to accurately direct or address data signals or information to various components to perform the particular functions or operations.

United States Patent No. 5,915,127 relates to a data processing apparatus to provide continuous and real-time reproduction of moving pictures. The apparatus includes first and second memories, a first interface, and a second interface.

Accordingly, for the reason stated above, and for other reasons that will become apparent upon reading and understanding the present specification, there is a need for a multiple channel communications interface that minimizes the number of inter-chip connections and pins on each chip. Additionally, there is a need for a multiple channel communications interface that simplifies the software required for implementation and minimizes overhead, and is scalable to provide more or fewer communications channels depending upon design constraints.

### Brief Description of the Drawings

Figure 1 is a schematic block diagram of an electronic system in accordance with the present invention.
Figure 2 is a schematic block diagram of another electronic system in accordance with the present invention.
Figure 3 is a schematic block diagram of a communications interface in accordance with an embodiment of the present invention.
Figure 4 is a schematic block diagram of a communications interface in accordance with another embodiment of the present invention.
Figure 5 is a schematic block diagram of a communications interface illustrating examples of control registers that may be used to transmit data to other chips or devices in accordance with the present invention.
Figure 6 is a table showing an example of a bit layout and bit definitions for a channel status register in accordance with the present invention.
Figure 7 is a table showing an example of a bit layout and bit definitions for a channel configuration register in accordance with the present invention.
Figure 8 is a table showing an example of a bit layout and bit definitions for an interface interrupt identification register in accordance with the present invention.
Figure 9 is a schematic block diagram of a communications interface illustrating examples of control registers that may be used to receive data from other chips or devices in accordance with the present invention.
Figure 10 is a schematic block diagram of a communications interface illustrating examples of control registers that may be used to send and receive general purpose input/output (GPIO) signals or data in accordance with the present invention.
Figure 11 is a block schematic diagram of a source communications interface and a target communications interface coupled by different communications links or pins in accordance with the present invention.
Figure 12 is a table illustrating an example of channel assignments for a communications interface in accordance with the present invention.
Figure 13 is an example of signal waveforms to transmit a message or data between a source communications interface and a target communications interface in accordance with the present invention.
Figure 14 is an example of signal waveforms to select a new channel to transmit data between a source communications interface and a target communications interface in accordance with the present invention.
Figure 15 is an example of signal waveforms illustrating message flow control in accordance with the present invention.
Figure 16 is a flowchart of an example of a method for transmitting data between semiconductor chips or devices in accordance with the present invention.

### Description of the Preferred Embodiments

In the following detailed description of the preferred embodiments, reference is made to the accompanying drawings which form a part thereof, and in which is shown by way of illustration specific embodiments in which the invention may be practiced. It is to be understood that other embodiments may be utilized and structural changes may be made without departing from the scope of the present invention.

The invention is as set out in claims 1 and 18.

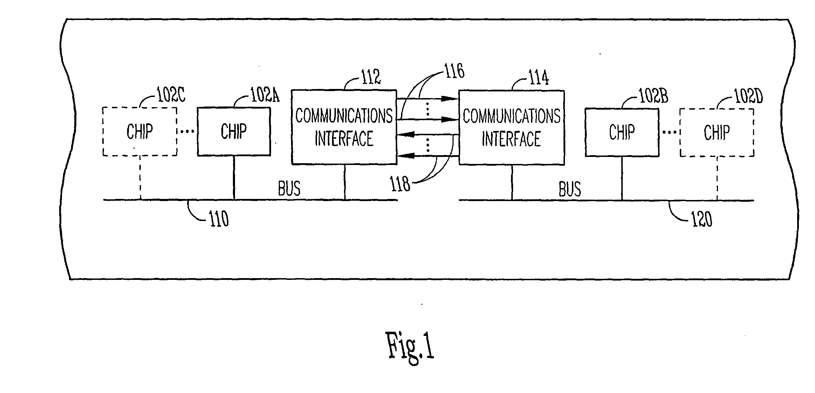

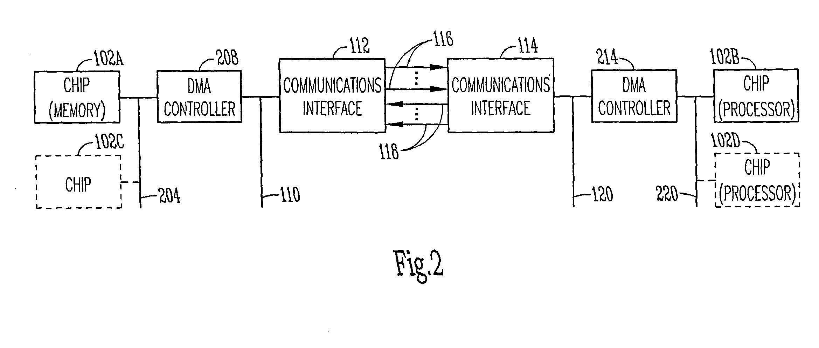

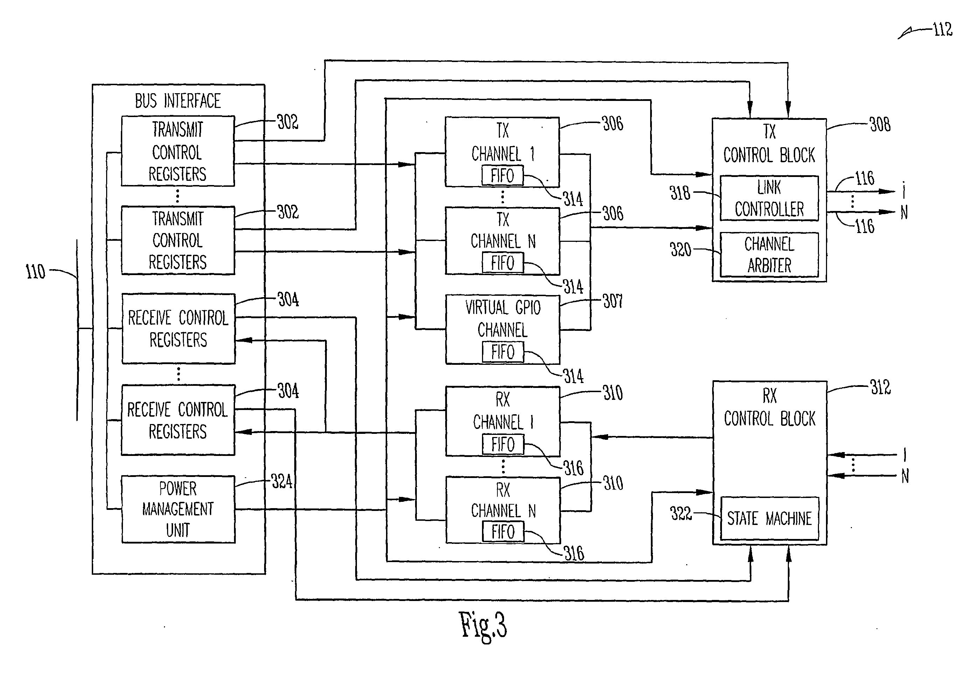

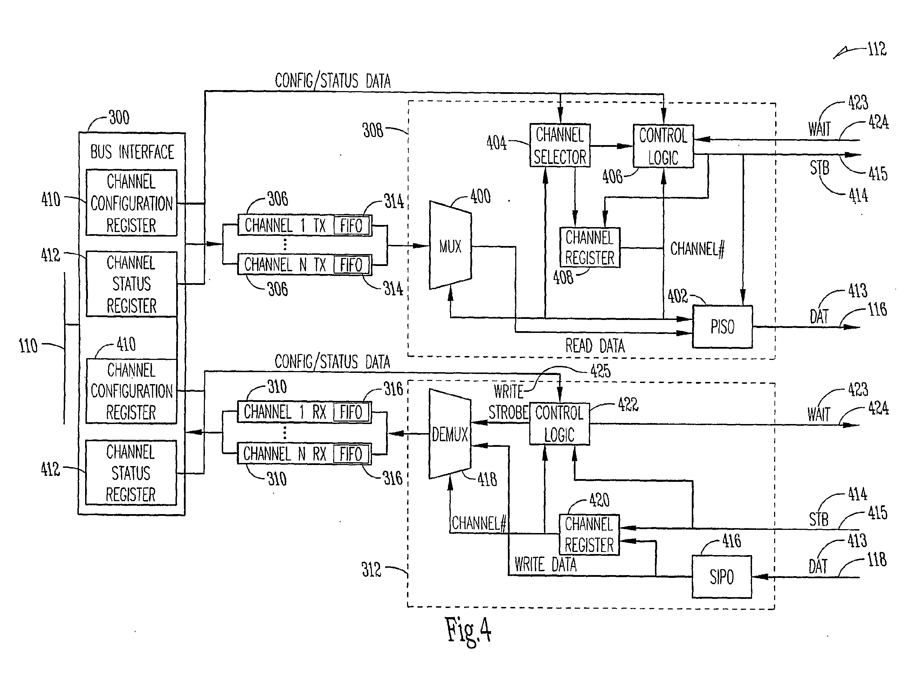

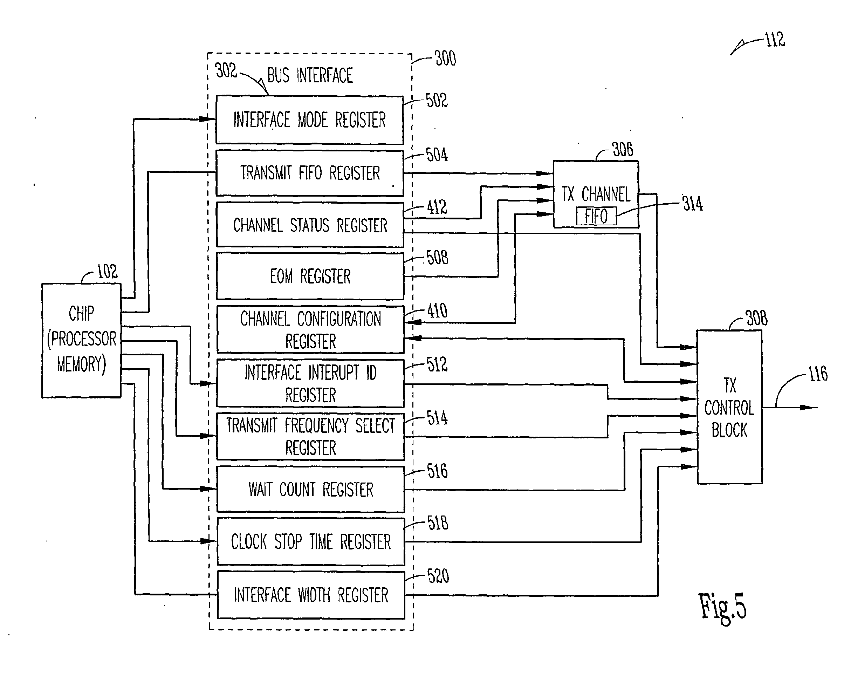

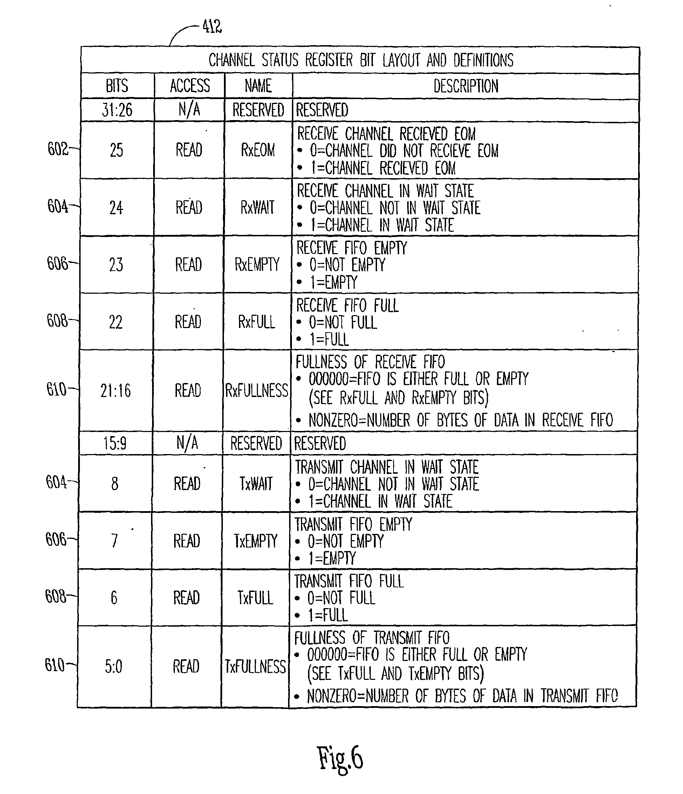

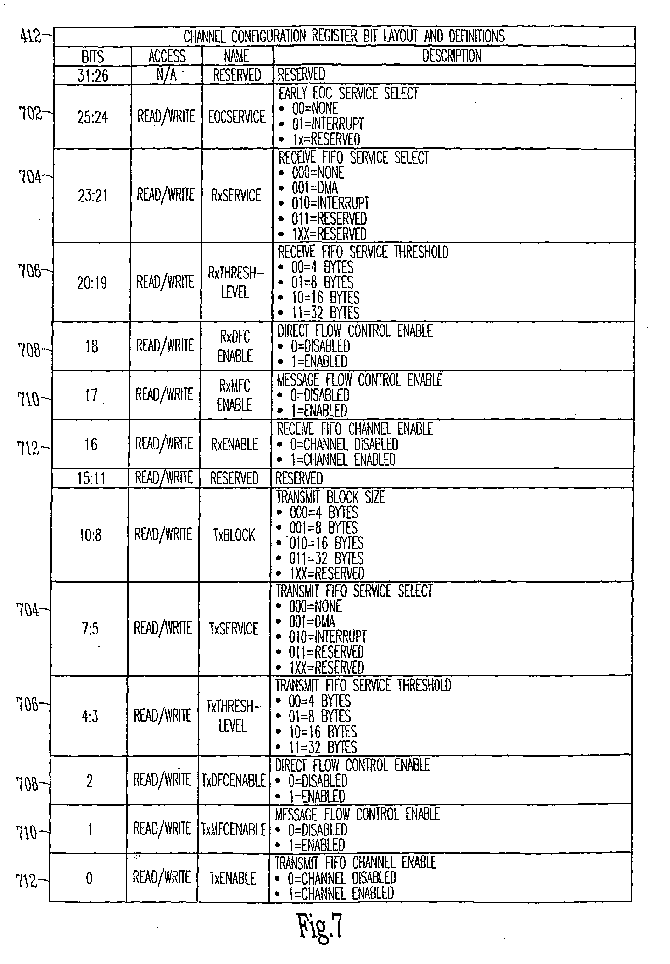

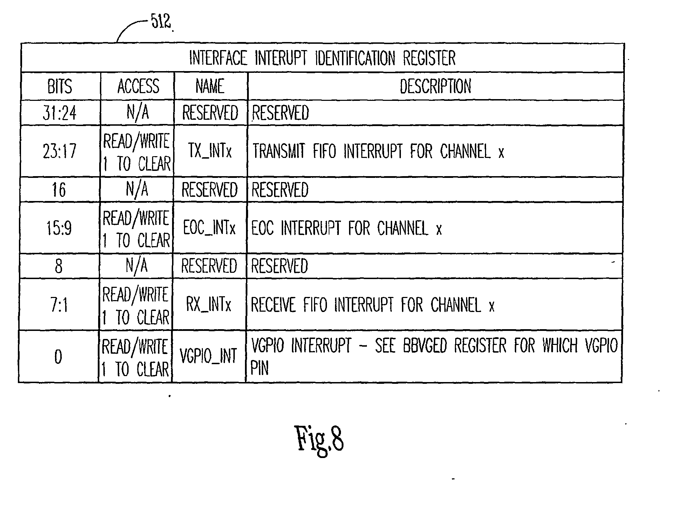

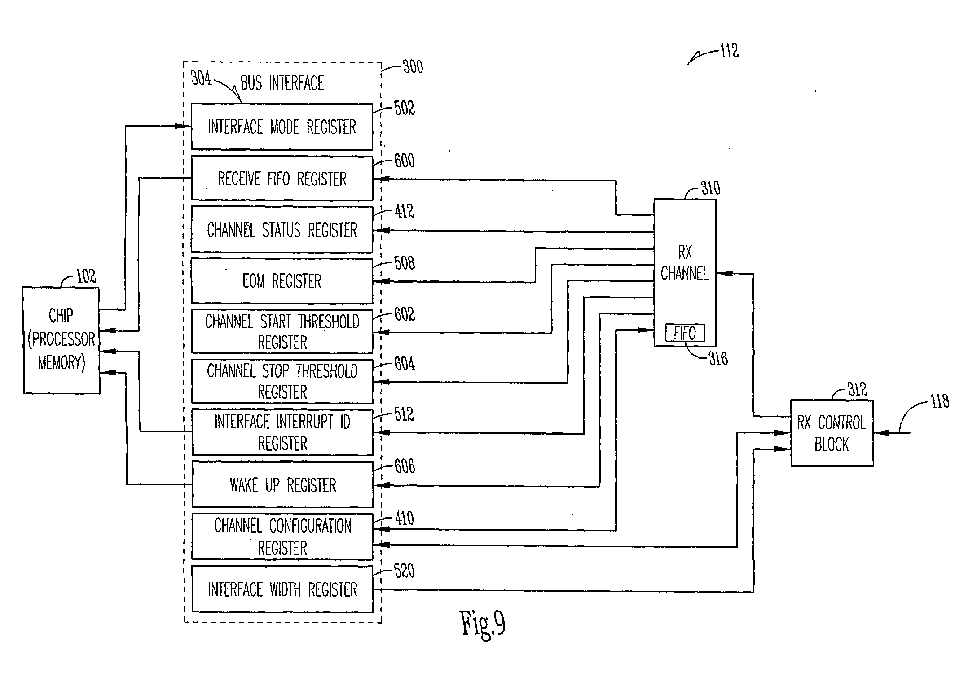

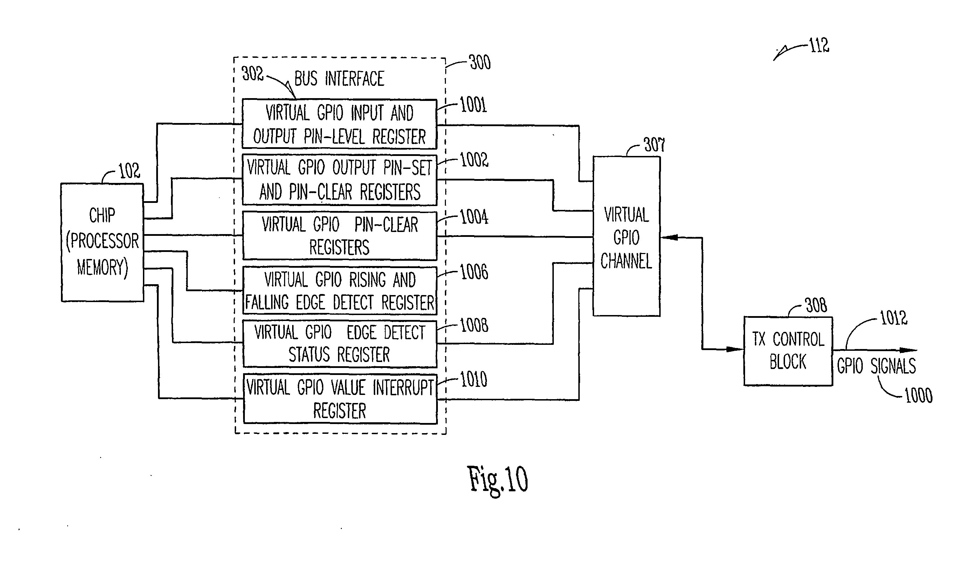

Figure 1 is a schematic block diagram of an electronic system 100 in accordance with an embodiment of the present invention. The electronic system 100 includes at least two semiconductor chips 102a and 102b, devices or circuits that communicate with one another. The electronic system 100 may include additional semiconductor chips, devices or circuits 102c and 102d. The electronic system 100 may also be formed as a single chip and the circuits or devices 102 may each be an on-chip silicon module. For example, semiconductor chips 102a and 102c may be processors, such as central processing units (CPUs), digital signal processors (DSPs) for the like, and the semiconductor chips 102b and 102d may be memory devices, peripheral equipment for the like. The chips 102a and 102c are coupled to an internal bus 110, such as a processor bus or a peripheral bus, and the internal bus 110 is coupled to a first communications interface 112 or multiple channel interface for communications between the chips 102a, 102b, 102c and 102d. The first communications interface 112 may be a communications interface between any different types of chips or may be a broadband-to-multimedia (BB-MM) interface for communications between a multimedia processor and a baseband chip. The first communications interface 112 is electrically coupled to a second communications interface 114 by a plurality of outgoing or outbound links or pin connections 116 and a plurality of incoming or inbound links or pin connections 118. The outbound links or pins 116 from the first communications interface 112 are the inbound links to the second communications interface 114 and the inbound links 118 to the first communications interface 112 are the outbound links from the second communications interface 114. The second communications interface 114 is electrically coupled to an internal bus 120 and the bus 120 is electrically coupled to be semiconductor chips 102b and 102d, if there are more than one chip 102 coupled to the second communications interface 114.

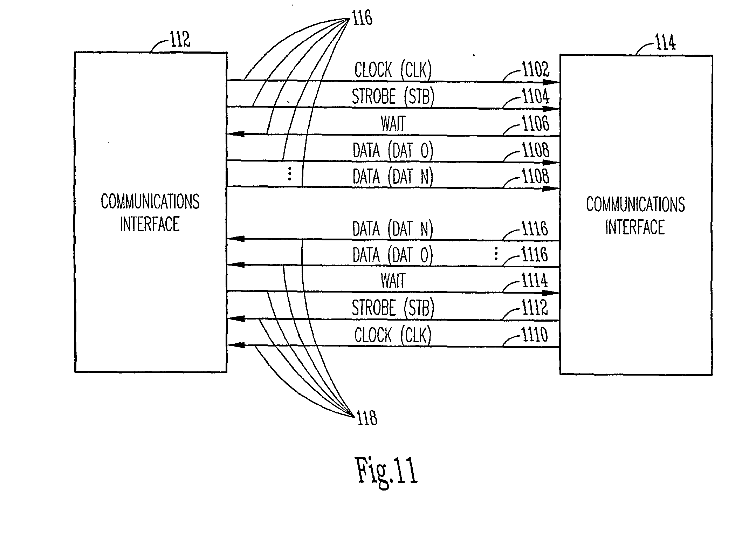

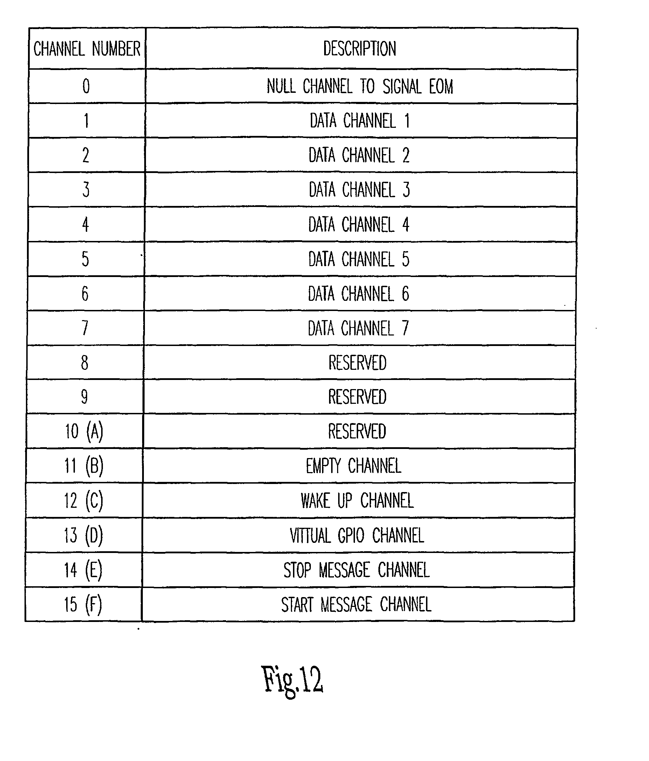

Figure 2 is a schematic block diagram of an electronic system 200 in accordance with another embodiment of the present invention. In the electronic system 200, at least one of the chips 102a and 102c (Figure 1) may be a memory device or the like coupled to a bus 204 that may be referred to as a processor bus. The processor bus 204 may be coupled to a direct memory access (DMA) controller 208. Direct memory access permits writing or reading directly to the memory chip 102a. The DMA controller 208 may be coupled to the first communications interface 112 by the internal bus 110 that may be referred to as a peripheral bus. Similarly, the second communications interface 114 may be coupled to a second DMA controller 214 by the peripheral or internal bus 120, and the second DMA controller 214 may be coupled to the chip 102b that may be a processor or the like. The chip 102b is coupled to the DMA controller 214 by a processor bus 220. The electronic system 200 may include at least a second processor chip 102d or additional devices coupled to the DMA controller 214 by the processor bus 220. The communications interfaces 112 and 114 may be communications interfaces for communications between any types of chips or may be BB-MM interfaces.

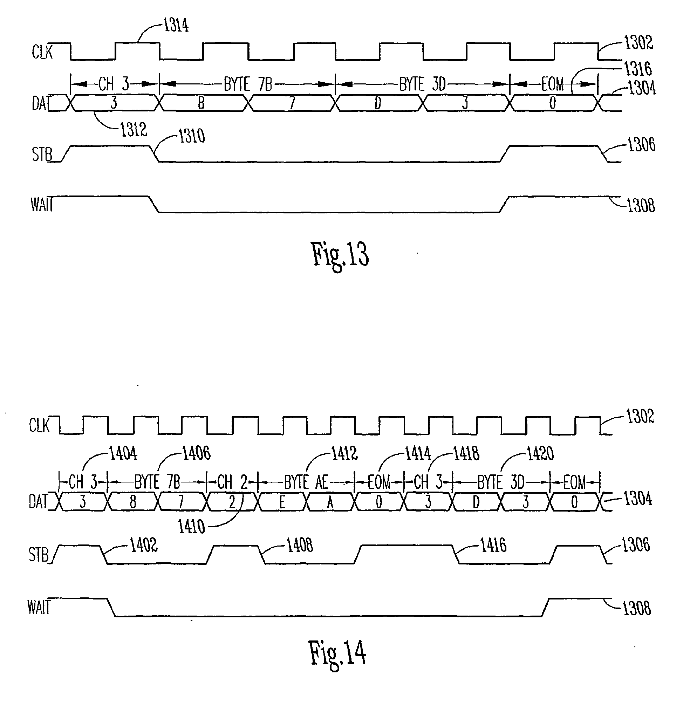

Figure 3 is a schematic block diagram of the first communications interface 112 in accordance with an embodiment of the present invention. The second communications interface 114 may be identical to the first communications interface 112. The first communications interface 112 may include a bus interface 300 coupled to the internal bus 110. The bus interface 300 includes a plurality of transmit control registers 302 and a plurality of receive control registers 304. The plurality of transmit control registers 302 are coupled to a plurality of transmit channels 306. The plurality of transmit channels 306 may also include one or more virtual general purpose input/output (GPIO) channels 307. The plurality of transmit channels 306 and the virtual GPIO channel 307 are coupled to a transmit (TX) control block 308. The outputs of the transmit control block 308 are the outbound links or pins 116. The receive control registers 304 are coupled to a plurality of receive channels 310. The receive channels 310 are coupled to a receive (RX) control block 312. Each of the transmit channels 306 may include a transmit first in first out (FIFO) 314 type buffer or memory device and each of the receive channels 310 may include a receive FIFO 316. The GPIO channel 307 may also include a first in first out (FIFO) 314 type buffer or memory device.

In accordance with an embodiments of the present invention, the transmit control block 308 may include a link controller 318 and a channel arbiter 320. The channel arbiter 320 determines which of the plurality of transmit channels 306 is to be activated or selected next to transmit data. As described in more detail below this could be one of a plurality of data channels, a virtual general-purpose input/output (GPIO) channel 307 or a message flow control (MFC) channel. The channel arbiter 320 uses as inputs the transmit channels 306, if any, that may be in a "wait" state and therefore cannot transmit data for some reason, the channel number of the currently activated transmit channel 306, and information from each of the transmit channels 306 or transmit FIFOs 314 indicating if they contain any data to be sent. The channel arbiter 320 outputs the channel number of the next transmit channel 306 or FIFO 314 to be activated for transmitting data.

The link controller 318 sends data from the active transmit channel 306 or FIFO 314 or from the virtual GPIO channel 307 across a selected one of the outbound links or pins 116. When the outbound link 116 is idle or the link controller 318 finishes sending a block of data across the selected outbound link 116, the link controller 318 uses the channel number generated by the channel arbiter 320 to determine which of the plurality of transmit channels 306 to switch to or select next. After switching to a new transmit channel 306, the link controller 318 will again send data across the selected one of the outbound links or pins 116. It should be noted that the link controller 318 and channel arbiter 320 may be implemented in software.

The receive control block 312 may include a state machine 322 that stores the channel number of the currently active receive channel 310 or FIFO 316, the number of data bits in the current byte that have been transmitted and the data bits themselves in the current byte that have already been received. Using this information the state machine 322 will write each byte to the correct receive channel 310 or receive FIFO 316 after the state machine 322 has received complete byte of data. The state machine 322 may also be implemented in software.

In accordance with an embodiment of the present invention, the communications interface 112 may include a power management unit 324. The power management unit 324 may be contained within the bus interface 300 or may be external to the bus interface 300. The power management unit 324 may be coupled to the plurality of transmit channels 306, plurality of receive channels 310, the transmit and receive control block 308 and 312, and the semiconductor chips 102 (Figures 1 and 2). The power management unit 324 facilitates placing the components of the system 200 into an idle state or sleep state or mode to conserve energy as described in more detail below. Before entering a sleep mode, the components may perform software handshaking. For example, the components may cause a sleep request message to be sent, receive an okay response and then enter the sleep mode. Sending and receiving these messages can be implemented by using any channel 306 or 307 and an associated control registers 302. Before sending a request-to-sleep message, the requesting chips 102 should transmit all of its data or messages in any transmit channels 306 or FIFOs 314 to stop outbound activity. Before responding with the okay to sleep message, the receiving chip 102 should receive all messages directed to it or drain any receive channels 310 or FIFOs 316 containing messages for the receiving chip 102 and terminate all receive activity. Once the requesting chips 102 receive the okay to sleep response, it can safely enter the sleep mode.

If the chip 102 needs to wake up, it may do so without notifying the other chips 102. However, it is recommended that the waking chip send a message via any channel 306 or 307 signifying that it is waking up.

Figure 4 is a schematic block diagram of the communications interface 112 illustrating examples of a transmit control block 308 and a receive control block 312 in accordance with another embodiment of the present invention. The transmit control block 308 may include a multiplexer or mux 400 coupled to the plurality of transmit channels 306. The multiplexer 400 is coupled to a parallel in serial out (PISO) converter 402. The PISO converter 402 is coupled to a channel selector 404 and a control logic circuit 406. The channel selector 404 and the control logic circuit 406 are each coupled to a channel register 408 that is also coupled to the PISO converter 402. The channel selector 404 and the control logic circuit 406 are also connected to a channel configuration register 410 and a channel status register 412. The channel configuration register 410 and the channel status register 412 may be included as part of the transmit control registers 302 (Figure 3) and contained in the bus interface 300. A channel configuration register 410 may be associated with each transmit channel 306 and each receive channel 310 and provides information about the specific transmit channel 306 or receive channel 310 such as the type of service selected (DMA, interrupt), the threshold level, the type message flow control and the like. A channel status register 412 may also associated with each transmit channel 306 and each receive channel 310 and provides information about the channel 306 or 310 such as whether the channel 306 or 310 or FIFO 314 or 316 is in a "Wait" state, is empty or full and the degree or amount of fullness or emptiness or if there is any data in the FIFO 314 or 316.

In operation, the channel selector 404 determines which transmit channel 306 is to be selected or activated next. The selected transmit channel 306 may be a data channel, the virtual GPIO channel 307 or a message flow control (MFC) channel as described in more detail below. The channel selector 404 utilizes as inputs configuration data from the channel configuration register 410 and status data from the channel status register 412 to determined or select the next transmit channel 306 to be activated to send data or information. The channel selector 404 provides as an output the channel number of the next transmit channel 306 and corresponding receive channel 310 to be selected or activated. The channel selector 404 determines which of the transmit channels 306 are ready to be activated in response to the configuration data and status data from the channel configuration register 410 and the channel status register 412. For example, transmit channels 306 with no data in their FIFOs 314 or in a wait state are not ready to be activated. A predetermined algorithm may be used to determine the next transmit channel 306 to be activated to transmit the data contained in its FIFO 314. Any algorithm can be used to select the next transmit channel 306 from among the ready transmit channels 306. For example, a round robin type algorithm or selection process may be used.

The control logic circuit 406 determines when a new transmit channel 306 is to be activated. A strobe (STB) signal 414 is generated by the control logic circuit 406 and transmitted by an outbound strobe link 415 to the other receiving or target communications interface 114 (Figure 2) when the control logic circuit 406 determines that a new channel 306 is to be activated or selected. The STB signal 414 also causes the new transmit channel number from the channel selector 404 to be stored by the channel register 408. The channel register 408 communicates the new transmit channel number to the PISO converter 402, the control logic circuit 406 and the multiplexer 400. The PISO converter 402 also sends the new channel number to the other receiving or target communications interface 114 over an outbound link or pin 116 or data (DAT) link.

Data signals or messages from a currently selected or activated one of the plurality of transmit channels 306 or FIFOs 314 is multiplexed by the multiplexer 400 using the currently activated channel number as the select bit for the multiplexer 400. The data is transferred by the multiplexer 400 to the PISO converter 402 or the data is read by the PISO converter 402 along with the channel number of the transmit channel 306 to be activated from the channel register 408 in response to the STB signal 414 being received by the channel register 408 and the PISO converter 402. The PISO converter 402 converts the parallel data read from the transmit FIFO 314 to a serial bit stream or data signals (DAT) 413 that is sent across the outbound links or pins 116. The outbound links or pins 116 correspond to the inbound links or pins 118 of the receiving or target communications interface 114. The PISO converter 402 also serializes and transmits the new channel number being activated with the data stream DAT 413.

The receive control block 312 includes a serial in parallel out (SIPO) converter 416 that is coupled to the inbound links or pins 118. The SIPO converter 416 is coupled to a demultiplexer 418 and a channel register 420. The channel register 420 is coupled to the demultiplexer 418 and to a control logic circuit 422. The demultiplexer 418 is coupled to the plurality of receive channels 310, and the control logic circuit 422 is coupled to another channel configuration register 410 and another channel status register 412 that may be included as part of the receive control registers 304 and included in the bus interface 300. In operation, the SIPO converter 416 continually converts data steam DAT signals 413 on the inbound links or pins 118 from serial data to parallel data. This data is transferred to both the channel register 420 and the demultiplexer 418. The channel register 420 stores the parallelized inbound data in response to the STB signal 414 on the strobe link 415. The STB signal 414 indicates that a new transmit channel 306 and a new corresponding receive channel 310 are being selected or activated. The control logic circuit 422 also receives the STB signal 414 and the channel number of the new receive channel 310 to be selected.

The receive control logic circuit 422 may transmit a "Wait" signal 423 over a "Wait" link 424 to the transmit control logic circuit 406 of the transmit control block 308 if the configuration and status data from the receive channel configuration register 410 and the receive channel status register 412 indicate that the new receive channel 310 or FIFO 316 is full, disabled or otherwise cannot receive data. The control logic circuit 422 will also generate and send a "WRITE STROBE" signal 425 to the demultiplexer 418 when a whole or complete byte of data has been received by the SIPO converter 416. The demultiplexer 418 selects the proper receive channel 310 in response to the channel number from the channel register 420. Parallelized data from the SIPO converter 416 will then be written into the selected one of the receive FIFOs 316 in response to the "WRITE STROBE" signal 425.

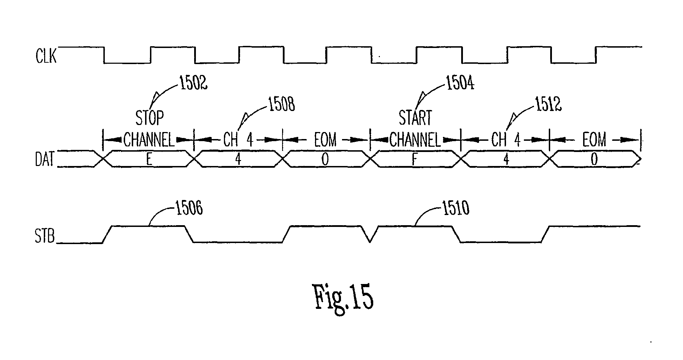

Figure 5 is a schematic block diagram of the communications interface 112 showing examples of control registers 302 (Figure 3) that may be used to transmit signals or data to other chips 102 or devices in accordance with an embodiment of the present invention. The control registers 302 are shown as forming at least a portion of the bus interface 300; although, the control registers 302 could be located outside or independently of the bus interface 300. The control registers 302 may include an interface mode register 502, a transmit FIFO register 504 associated with each channel 306, a channel status register 412 associated with each channel 306, as previously discussed with respect to Figure 4, an end of message (EOM) register 508 associated with each channel 306, a channel configuration register 410 associated with each channel 306, as previously discussed with respect to Figure 4, an interface interrupt identification (ID) register 512, a transmit frequency select register 514, a wait count register 516, a clock stop time register 518, and an interface width register 520.

The interface mode register 502 may be coupled to the chip 102 which may be a processor chip memory device or other device. The communications interface 112 may be operated in different modes, such as a standard mode, a legacy mode or other modes. The interface mode register 502 controls in which mode the communications interface 112 will operate.

The transmit FIFO register 504 writes data from the chip 102 to the associated transmit channel 306 or FIFO 314. The transmit FIFO register 504 may be accessed after the transmit channel 306 or FIFO 314 drops below a threshold value defined in the channel configuration register 410. The transmit FIFO register 504 may be accessed either directly by the processor, memory or other type chip 102 after an interrupt or polling signal or via direct memory access (DMA). If there is a multiple byte message transfer, the bytes may be placed in little-endian order or with the least significant digit first.

The channel status register 412 is coupled to the transmit channel 306 and to the transmit control block 308. Figure 6 shows an example of a bit layout and bit definitions for the channel status register 412. The channel status register bit layout shown in Figure 6 may be used for either a transmit channel 306 or a receive channel 310. The channel status register 412 may include information about whether the receive channel 310 received an end of message (EOM) signal 602; whether the receive channel or FIFO 310 or the transmit channel or FIFO 306 is in a wait state; whether the receive FIFO 310 or the transmit FIFO 306 is full or empty 606 and 608; and the number of bytes of data 610 in either the receive FIFO 310 or the transmit FIFO 306.

Referring back to Figure 5, the EOM register 508 is coupled to a corresponding transmit channel 306 or FIFO 314 and indicates that an entire or complete message has been written to the corresponding transmit FIFO 314.

As previously discussed, the channel configuration register 410 is coupled to the transmit channel 306 and to the transmit control block 308. Figure 7 shows an example of a bit layout and bit definitions for the channel configuration register 410. The channel configuration status register bit layout shown in Figure 7 may be used for either a transmit channel 306 or a receive channel 310. The channel configuration register 410 may include information about whether early end of descriptor chain (EOC) service is selected 702, that is, whether a message can be interrupted before the end of the message is read; the type of receive or transmit FIFO service selected, DMA or interrupt 704; the receive or transmit FIFO service threshold 706; transmit and receive flow control, direct flow control (DFC) or message flow control (MFC) 708 and 710; and whether an associated receive FIFO 316 or an associated transmit FIFO 314 is enabled to receive or transmit messages or data 712.

Referring back to Figure 5, the interface interrupt ID register 512 may be coupled to the chip 102 and to the transmit control block 308. Figure 8 shows an example of a bit layout and bit definitions for the interface interrupt ID register 512. Interrupts can be generated when a transmit FIFO 314 or a receive FIFO 316 reaches its threshold value set by its corresponding channel configuration registers 410, when an end of message (EOM) is receive, or when a DMA descriptor chain is reached before the end of a message is read. Generating an interrupt on an early DMA end of channel is necessary to inform a processor type chip 102 of improper DMA programming. As shown in Figure 8, each interface interrupt type has a bit associated with it in the interface interrupt ID register 512. When an interface interrupt occurs, the corresponding bit is set in the interface interrupt ID register 512.

Referring back to Figure 5, the transmit frequency select register 514, the wait count register 516, the clock stop time register 518 and the interface width register 520 may each be coupled between the chip 102 and the transmit control block 308. The transmit frequency select register 514 selects the clock speed of the outbound link 116. The wait count register 516 determines the time (in transmit clock cycles) that the transmit control block 308 will wait before retrying a transmit to a receive channel 310 that sent a wait signal 423 (Figure 4). Each transmit channel 306 has an independent wait count register 516 that counts the time after a wait signal 423 is received before a retransmission to the receive channel 310 that caused the wait signal 423 to be sent. The clock stop time register 518 determines the time (in transmit clock cycles) that a clock signal will stop transitioning after the outbound link 116 become idle. It should be noted that a clock signal may be generated by the interfaces 112 and 114 of the present invention only when needed. The interface width register 520 specifies the width or number of data links 116 that the first communications interface 112 will transmit over simultaneously to the second communications interface 114.

Figure 9 is a schematic block diagram of the first communications interface 112 illustrating examples of control registers 304 that may be used to receive data from the second communications interface 114 in accordance with an embodiment of the present invention. The control registers 304 are shown in Figure 9 as part of the bus interface 300 but could be located separate from the bus interface 300. The control registers 304 may include an interface mode register 502, a receive FIFO register 600 associated with each receive channel 310, a channel status register 412 associated with each receive channel 310, an end of message (EOM) register 508 associated with each receive channel 310, a channel start threshold register 602 associated with each receive channel 310, a channel stop threshold register 604 associated with each receive channel 310, an interface interrupt ID register 512, a wake-up register 606, a channel configuration register 410 associated with each receive channel 310 and an interface width register 520. The interface mode register 502, the channel status register 412, the EOM register 508, the interface interrupt ID register 512, the channel configuration register 410 and the interface width register 520 are the same or similar registers to those previously described with respect to Figures 4 and 5.

The receive FIFO register 600 is coupled between an associated receive channel 310 or FIFO 316 and the chip 102 to receive data. The receive FIFO register 600 reads data from the associated one of the receive channels 310 or FIFOs 316. When a multiple byte transfer occurs, the bytes may be placed in little-endian order. When the receive data is read from the receive FIFO 316 by the associated receive FIFO register 600, the data may be removed from the receive FIFO 316. Generally, the receive FIFO register 600 may be accessed after the receive FIFO 316 exceeds its threshold value as defined in the channel configuration register 410 or when an EOM message or signal is receive by the interface 112. The receive FIFO register 600 may be accessed directly by the chip 102 after an interrupt or polling signal or the FIFO register 600 may be accessed via DMA.

The channel start threshold register 602 and the channel stop threshold register 604 are each coupled between an associated one of the receive channels or FIFOs 316 and the chip 102 receiving data. The channel start threshold register 602 and the channel stop threshold register 604 store the respective start and stop threshold values for the associated receive FIFO 316. When the amount of data or bits in a receive FIFO 316 exceeds the stored value in the channel stop threshold register 604, a stop message for the associated receive FIFO 316 is sent to the source communications interface 112 sending the data to place the associated transmit FIFO 314 in a wait state. When the amount of data or bits in the receive FIFO 316 falls below the value in the channel start threshold register 602, a start message is sent for that receive FIFO 316 to the source communications interface 112 sending the data and the associated transmit FIFO 314 is reactivated or taken out of the wait state to continue transmitting the data or message. The threshold value stored in the channel stop threshold register 604 should be higher than the threshold value stored by the channel start threshold register 602 for the interface 112 to function properly.

The wake-up register 606 is coupled between the receive channel 310 or FIFO 316 and the chip 102. The wake-up register 606 is used to wake up the connected chip 102.

Figure 10 is a schematic block diagram of a communications interface 112 illustrating examples of control registers 302 that may be used to send and receive general purpose input/output (GPIO) signals 1000 or data in accordance with an embodiment of the present invention. The control registers 302 for performing virtual GPIO functions may include a virtual GPIO input and output pin-level register 1001 associated with each virtual GPIO channel 307, a virtual GPIO output pin-set register 1002 and a virtual GPIO pin-clear register 1004 both associated with each virtual GPIO channel 307, a virtual GPIO rising and falling edge detect register 1006 associated with each GPIO channel 307, a virtual GPIO edge detect status register 1008 associated with each virtual GPIO channel 307, and a virtual GPIO value interrupt register 1010. The virtual GPIO input and output pin-level register 1001 is coupled between the virtual GPIO channel 307 and the chip 102 and provides the state or status of each GPIO pin 1012 for sending GPIO data. The virtual GPIO output pin-set and pin-clear registers 1002 control the state on each GPIO pin 1012. The virtual output GPIO pin 1012 is set by writing a 1 to the corresponding virtual GPIO output pin-set register 1002 and the virtual GPIO output pin 1012 is cleared by writing a 1 to the corresponding virtual GPIO pin-clear register 1002. The virtual GPIO rising and falling edge register 1006 is coupled between the virtual GPIO channel 307 and the chip 102. The virtual GPIO rising and falling edge register 1008 configures the GPIO pin 1012 to detect either a rising-edge transition, a falling edge transition or both. When such a transition is detected, a bit is set in the virtual GPIO detect status register 1008. The virtual GPIO value interrupt register 1010 is coupled between the virtual GPIO channel 307 and the chip 102. The virtual GPIO value interrupt register 1010 contains a configuration bit that may be set to specify if an interrupt is to be generated when a virtual GPIO value or signal is received by the first communications interface 112 across an inbound link 118 (Figure 1).

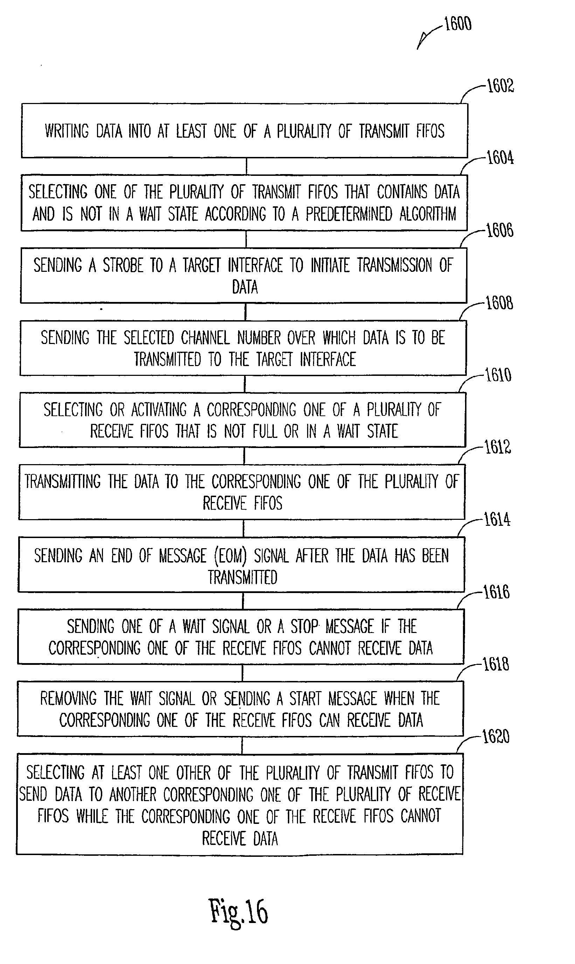

Figure 11 is a block schematic diagram of an example of the first communications interface 112 and the second communications interface 114 coupled by different outbound communications links or pins 116 and inbound communications links or pins 118 and examples of signals that may be transmitted over each of the links 116 and 118 between the first communication interface 112 and the second communications interface 114. The outbound links or pins 116 may include a clock link or pin 1102 to send a CLK signal, a strobe link or pin 1104 to send a STB signal, a wait link or pin 1106 to send a WAIT signal and a plurality of data links or pins 1108 that are used to facilitate the transmission of data, DAT signals, or messages from the first interface 112 to the second interface 114. Similarly, the inbound links or pins 118 also may include a clock link 1110 to send a CLK signal, a strobe link 1112 to send a STB signal, a wait link 1114 to send a WAIT signal and a plurality of data links or pins 1116 to facilitate the transmission of data, DAT signals, or messages from the second interface 114 to the first interface 112. An interface 112 or 114 sending or transmitting data may be referred to as a source or a source interface and an interface 112 or 114 receiving data may be referred to as a target or a target interface.

In accordance with an embodiment of the present invention, an example of channel number assignments or designations for the transmit and receive channels 306 and 310 (Figure 3) and a description of the function of each channel 306 and 310 according to its number assignment is shown in Figure 12. Channel 0 may be a null channel to send an end of message (EOM) signal as previously discussed. Channels 1-7 may be used for the transmission of data or messages. If a source communications interface 112 must stop transmitting a message without activating a new channel 1-7, the communications interface 112 may activate channel 11, the empty channel. Channel 11 may also be designated as channel B in hexadecimal notation. Channel 13 or D may be used as the virtual GPIO channel 307 (Figure 3). Channel 14 or E and Channel 15 or F may be used to send stop and start messages if the transmission of data to a selected receive FIFO 316 must be halted for some reason.

Figure 13 is an example of signal waveforms to transmit the message "7B3D" over data channel 3. The first waveform is the clock or CLK signal 1302 and is transmitted on the clock link or pin 1102 (Figure 11). The second waveform is the data or DAT signal 1304 and is transmitted on the data links 1108 (Figure 11). The third waveform is the strobe or STB signal 1306 and is transmitted on the strobe link or pin 1104 (Figure 11). The fourth waveform is the wait signal 1308 and is transmitted on the wait link or pin 1106 (Figure 11). One of the data channels 1-7 (Figure 12) is activated by generating a STB signal or pulse 1310 on the strobe link 1104 or pin and indicating the data channel number 1-7, in this case channel number 3 illustrated by pulse 1312 in Figure 13, on a corresponding data link (DAT) 1108 before the next CLK signal or pulse 1314. If the communications interface 112 is set to detect rising edges as opposed to falling edges of the CLK signal 1302, channel 3 will be selected or will become the active channel 306 and 310 for transmitting and receiving data when the next rising edge transition of the CLK signal 1314 is detected. The data signals or message "3D7B" 1304 will be transferred over channel 3 on each of the following rising-edge transitions of the CLK signal 1302.

As previously mentioned, the communications interfaces 112 and 114 may support different interface widths. The appropriate bit in the interface width register 520 may be set to provide the different interface widths, such as a serial width or mode (1 bit), a two-bit width or mode, a nibble width or mode (4-bits) and so forth. In the example shown in Figure 13 the signals 1302, 1304, 1306 and 1308 are in the nibble width or mode. Accordingly, four data links or pins 1108 in Figure 11, DAT(0), DAT(1), DAT(2) and DAT(3), may be used to transmit a message in nibble mode.

When the transmission of the message through a data channel 1-7 (Figure 12) is complete, the data link (DAT) 1108 (Figure 11) may change the active channel designation to channel 0, or the null channel (Figure 12). Switching to the null channel signifies the end of a message (EOM) and therefore initiates service at the target communications interface 114 for the corresponding receive FIFO 316 or channel 310 to become active. An end of message (EOM) signal or pulse 1316 is shown at the end of the data bit stream or signal 1304 in Figure 13.

Activating a new data channel 1-7 requires reassertion of the STB signal 1306 on the strobe link or pin 1104 (Figure 11) and transmitting the new data channel number 1-7 on the data links 1108. The new data channel 1-7 may be activated when no data transfers are occurring, in the middle of a data transfer on another data channel 1-7 or just after the current data transfer has finished and the null channel 0 has been activated to indicate the end of a message. An example of selecting or activating a new data channel 1-7 is illustrated in Figure 14. In the example of Figure 14, channel 3 has been activated by the STB signal or pulse 1402 and sending a channel number "3" pulse 1404 on the data link 1108 to send the message "3D7B." After transmitting the "7B" signal 1406, another STB signal or pulse 1408 is generated and a data signal 1410 designating channel number 2 is sent on the data link 1108 to activate channel 2 to send the message "AE" 1412. After the end of message (EOM) signal 1414, channel 3 is again activated by an STB signal or pulse 1416 and a channel number "3" signal 1418 to reactivate channel number 3 and send the remainder of the message "3D" 1420. The message on channel 3 may be pre-empted by the message on channel 2 because the channel 2 message may have a higher priority.

While receiving data, the receive FIFO 316 (Figure 3) can become full which would prevent the receive FIFO 316 from accepting new data. One example of a flow control method to notify the source communications interface 112 of this condition may be referred to as direct flow control (DFC) and another example of a flow control method for a FIFO full condition may be referred to as message flow control (MFC). Both methods temporarily disable data transfers by putting the active transmit channel 306 or FIFO 314 in a "wait" state. When the active transmit channel 306 is in a wait state, the source communications interface 112 cannot send any data through that channel 306. Any attempt to transmit data will be ignored. Either or both flow control methods can be used by the communications interfaces 112 and 114.

Referring back to Figure 11, in the direct flow control method, the target interface 114 will assert a "wait" signal 1308 over the wait link or pin 1106 to the source interface 112, if the active receive channel 310 or FIFO 316 is disabled, invalid or full. The "wait" signal 1308 will also be sent after a reset and while the data link 1108 is idle, i.e., there is no data or messages being transmitted. The source interface 112 will sample the "wait" signal 1308 on each CLK pulse 1302 of the CLK link 1102 while the active data channel 1-7 is in a wait state for as long as the "wait" signal 1308 is being asserted. When the "wait" signal 1308 goes low or is no longer asserted, data transmission can resume. Another data channel 1-7 may be activated while the currently active channel 1-7 is in a wait state by transmitting the STB signal 1306 on the strobe link 1104 and transmitting a new data channel number 1-7 on a corresponding data link 1108.

Figure 15 is an example of message flow control (MFC) that uses stop and start messages 1502 and 1504 to put an active data channel 1-7 in a wait state. When a receive FIFO 316 exceeds a user-programmable threshold level set in the channel stop threshold register 604, the corresponding channel 1-7 will be placed in a wait state by sending a stop message 1502. The stop message 1502 is sent by transmitting the channel number, for example channel 4, on channel 14 or channel E in hexadecimal on a data link 1116 (Figure 11) from the target interface 114 to the source interface 112. Accordingly, a strobe signal or pulse 1506 is sent along with the stop channel number E 1502 to activate the stop channel 14 or E (Figure 12). The number of the data channel 1-7 to be placed in the wait state is then transmitted on the stop channel E. In the example of Figure 15, a signal 1508 designating channel 4 is transmitted on channel E or the stop channel. When the source interface 112 receives the stop message 1502, the active data channel 1-7 will enter a wait state and stop sending data until taken out of the wait state. The channel 1-7 exits the wait state when the source interface 112 receives a start message 1504. When the receive FIFO 316 for the active channel 1-7 drops below a user selected threshold level set in the channel start threshold register 602, a start message 1504 is sent by transmitting the channel number of the channel 1-7 to be reactivated over channel 15 or channel F in hexadecimal on an outbound data link 1116 from the target interface 114 to the source interface 112. Accordingly, in the example of Figure 15, another strobe signal or pulse 1510 is transmitted on the strobe link 1104 and the start channel designation "F" signal 1504 is transmitted on the data link 1116 followed by the channel number "4" signal 1512 to take channel 4 out of the wait state. As previously discussed, the threshold levels for sending the channel stop and start messages 1502 and 1504 may be set by a user in the channel stop threshold register 604 and the channel start threshold register 602 (Figure 9). Message flow control has higher priority than other messages being sent on the data links 1108 and 1116 and will preempt other message traffic as soon as the current byte is sent.

Figure 16 is a flowchart of an example of a method 1600 of transmitting data or messages between semiconductor chips 102 or other devices in accordance with an embodiment of the present invention. In block 1602, data is written into at least one of the plurality of transmit FIFOs 314. In block 1604, one of the plurality of transmit FIFOs 314 that contains data and is not in a wait state according to a predetermined algorithm, such as round-robin or the like, is selected to form an active channel 1-7 for transmitting the data from the source interface 112 to the target interface 114. In block 1606 a strobe signal is sent from the source interface 112 to the target interface 114 to initiate the transmission of data. In block 1608, the selected channel number of the active channel 1-7 is transmitted over a selected data link 1108 from the source interface 112 to the target interface 114. In block 1610, a corresponding one of a plurality of receive FIFOs 316 that is not full or in a wait state is selected to form the active channel 1-7 and in block 1612, the data or message is transmitted over a corresponding data link 1108 from the active channel 1-7 transmit FIFO 314 of the source interface 112 to the corresponding one of the receive FIFOs 316 of the target interface 114. In block 1614, an end of message (EOM) signal 1316 is sent after all of the data has been transmitted. In block 1616, a wait signal 1308 or a stop message 1502 may be sent from the target interface 114 to the receive interface 112 if the corresponding one of the receive FIFOs 316 cannot receive data because it is disabled, invalid, full or for some other reason cannot receive data. In block 1618, the wait signal 1308 is removed or a start message 1504 may be sent if the corresponding one of the receive FIFOs 316 can now receive data. In block 1620, at least one other transmit FIFO 314 and another corresponding receive FIFO 316 may be selected or activated to form an active channel 1-7 while the one receive FIFO 316 cannot receive data.

Although specific embodiments have been illustrated and described herein, it will be appreciated by those of ordinary skill in the art that any arrangement which is calculated to achieve the same purpose may be substituted for the specific embodiment shown. This application is intended to cover any adaptations or variations of the present invention. Therefore, it is intended that this invention be limited only by the claims.

## Claims

1. A communications interface (112), comprising:
a bus interface (300) coupleable to a bus (110);
a plurality of transmit channels (306) coupled to the bus interface;
a plurality of receive channels (310) coupled to the bus interface;
**characterised by** further comprising:
a transmit control block (308) coupled to the plurality of transmit channels to select one of the transmit channels that contains data and is not in a wait state to transmit data;
a receive control block (312) coupled to the plurality of receive control channels to select one of the receive channels that is not full or in a wait state to receive data;
a stop message channel coupled to the receive control block and adapted to send a stop message to a source when a selected receive channel reaches a stop threshold value, thereby to put the selected receive channel in a wait state; and
a start message channel coupled to the receive control block and adapted to send a start message to the source when the selected receive channel reaches a start threshold value, thereby to cause the selected receive channel to exit the wait state.

2. The communications interface (112) of claim 1, further comprising a direct memory access controller coupled to the bus interface.

3. The communications interface (112) of claim 1, wherein the bus interface (300) comprises a plurality of transmit control registers (302) and a plurality of receive control registers (304).

4. The communications interface (112) of claim 3, wherein the plurality of transmit control registers (302) comprises at least one of:
an interface width register (520) coupled to the transmit control block (308);
a transmit first in first out (FIFO) register (504) associated with each transmit channel (306);
an end of message (EOM) register (508) associated with each transmit channel;
an interface interrupt identification register (512) coupled to the transmit control block;
a transmit frequency select register (514) coupled to the transmit control block;
a wait count register (516) coupled to the transmit control block;
a clock stop time register (518) coupled to the transmit control block;
a channel configuration register (410) associated with each transmit channel; and
a channel status register (412) associated with each transmit channel.

5. The communications interface (112) of claim 3, wherein the plurality of receive control registers (304) comprises at least one of:
a receive FIFO register (600) coupled to each receive channel (310);
an interface width register (520) to select a predetermined number of bits to be received across the communications interface by the receive control block (308);
a channel stop register (604) associated with each receive channel;
a channel start register (602) associated with each receive channel;
a wake up register (606) associated with at least one receive channel;
an end of message register (508) associated with each receive channel;
a channel configuration register (410) associated with each receive channel; and
a channel status register (412) associated with each receive channel.

6. The communications interface (112) of claim 1, wherein each of the plurality of transmit channels (306) and each of the plurality of receive channels (310) comprises a first in first out (FIFO) memory device (314, 316).

7. The communications interface (112) of claim 1, further comprising a power management unit (324) coupled to each of the plurality of transmit channels (306) and receive channels (310).

8. The communications interface (112) of claim 1, wherein the transmit control block (308) comprises a channel arbiter (320) adapted to select a next one of the plurality of transmit channels (306) to be activated.

9. The communications interface (112) of claim 1, wherein the transmit control block (308) comprises a link controller (318) adapted to transmit data from a selected transmit channel (306) across a selected link.

10. The communications interface (112) of claim 1, wherein the receive control block (312) comprises a state machine (322) adapted to store a current active channel number, a number of bits in a current byte being transferred and to write each byte to a selected one of the plurality of receive channels (310).

11. The communications interface (112) of claim 1, wherein the plurality of transmit channels (306) comprises:
at least one channel (1102) adapted to send a clock signal;
at least one channel (1104) adapted to send a strobe signal;
at least one channel (1106) adapted to send a wait signal;
and at least one channel (1108) adapted to send data.

12. The communications interface (112) of claim 1, wherein the plurality of receive channels (310) comprises:
at least one channel (1110) adapted to send a clock signal;
at least one channel (1112) adapted to send a strobe signal;
at least one channel (1114) adapted to send a wait signal;
and at least one channel (1116) adapted to send data.

13. The communications interface (112) of claim 1, wherein at least one of the plurality of transmit channels (306) and the plurality of receive channels (310) comprise a virtual general purpose input/output channel (307).

14. The communications interface (112) of claim 1, further comprising:
a channel stop threshold register storing the stop threshold value to cause the stop message to be sent to a source when the selected receive channel reaches the stop threshold value; and
a start threshold register storing the start threshold value to cause the start message to be sent to a source when the selected receive channel reaches the start threshold value.

15. The communications interface (112) of claim 1, further comprising at least one of a direct flow control mode and a message flow control to control a flow of data across the communications interface.

16. The communications interface (112) of claim 1, wherein the transmit control block (308) comprises:
a multiplexer coupled to the plurality of transmit channels;
a parallel in serial out converter (PISO) coupled to the multiplexer; and
a control circuit coupled to the multiplexer and the PISO and adapted to select one of the plurality of transmit channels to transmit data.

17. The communications interface (112) of claim 1, wherein the receive control block (312) comprises:
a demultiplexer coupled to the plurality of receive channels; a serial in parallel out converter (SIPO); and
a control circuit coupled to the demultiplexer and adapted to select one of the plurality of receive channels to receive data.

18. A method (1600) of transmitting data between semiconductor chips, **characterised by**:
writing (1602) data into at least one of a plurality of transmit FIFOs;
selecting (1604) one of the plurality of transmit FIFOs that contains data to be transmitted and that is not in a wait state;
transmitting (1612) the data to a corresponding selected one of the plurality of receive FIFOs that is not full or in a wait state;
sending (1616) a stop message if the corresponding one of the receive FIFOs reaches a stop threshold value, thereby to put the corresponding one of the FIFOs in a wait state; and
sending (1618) a start message when the corresponding one of the receive FIFOs reaches a start threshold value, thereby to cause the corresponding one of the receive FIFOs to exit the wait state.

19. The method (1600) of claim 18, further comprising:
sending (1616) a wait signal to a transmit control block if the corresponding one of the receive FIFOs cannot receive data; and
removing (1618) the wait signal when the corresponding one of the receive FIFOs can receive data.

20. The method (1600) of claim 18, further comprising selecting (1620) another one of the plurality of transmit FIFOs to send data to another corresponding one of the plurality of receive FIFOs while the corresponding one of the receive FIFOs cannot receive data.

21. The method (1600) of claim 18, further comprising:
sending (1606) a strobe signal to initiate a transmission of data;
sending (1608) a selected channel number over which the data is to be transmitted; and
sending (1614) an end of message signal after the data has been transmitted.

22. The method (1600) of claim 18, further comprising:
selecting one of the plurality of transmit FIFOs and the corresponding one of the plurality of receive FIFOs by a predetermined algorithm.

23. The method (1600) of claim 18, wherein the predetermined algorithm is round-robin.

24. The method (1600) of claim 18, further comprising selecting an interface width from one of a serial width, a two-bit width and a nibble width.

## Patentansprüche

1. Kommunikationsschnittstelle (112), umfassend:
eine Bus-Schnittstelle (300), die an einen Bus (110) angeschlossen werden kann;
mehrere Sendekanäle (306), die an die Bus-Schnittstelle angeschlossen sind;
mehrere Empfangskanäle (310), die an die Bus-Schnittstelle angeschlossen sind;
**gekennzeichnet durch** weiteres Umfassen von:
einem Sendesteuerblock (308), der an die mehreren Sendekanäle angeschlossen ist, um einen der Sendekanäle, der Daten enthält und nicht im Wartezustand ist, zur Übertragung von Daten auszuwählen;
einem Empfangssteuerblock (312), der an die mehreren Empfangssteuerkanäle angeschlossen ist, um einen der Empfangskanäle auszuwählen, der nicht voll oder in einem Wartezustand ist, um Daten zu empfangen;
einem Stoppnachrichtenkanal, der an den Empfangssteuerblock angeschlossen und dafür ausgelegt ist, eine Stoppmeldung an eine Quelle zu senden, wenn ein ausgewählter Empfangskanal einen Stoppschwellwert erreicht, wodurch der ausgewählte Empfangskanal in einen Wartezustand versetzt wird; und
einem Startnachrichtenkanal, der an den Empfangssteuerblock angeschlossen und dafür ausgelegt ist, eine Startmeldung an die Quelle zu senden, wenn der ausgewählte Empfangskanal einen Startschwellwert erreicht, wodurch der ausgewählte Empfangskanal den Wartezustand verlässt.

2. Kommunikationsschnittstelle (112) nach Anspruch 1, die ferner einen Direktspeicherzugriffscontroller umfasst, der an die Bus-Schnittstelle angeschlossen ist.

3. Kommunikationsschnittstelle (112) nach Anspruch 1, wobei die Bus-Schnittstelle (300) mehrere Sendesteuerregister (302) und mehrere Empfangssteuerregister (304) umfasst.

4. Kommunikationsschnittstelle (112) nach Anspruch 3, wobei die mehreren Sendesteuerregister (302) mindestens eins der folgenden umfasst:
ein Schnittstellenbreitenregister (520), das an den Sendesteuerblock (308) angeschlossen ist;
ein Sende-FIFO-Register (504), das mit jedem Sendekanal (306) verknüpft ist;
ein Nachrichtenende (EOM) -Register (508), das mit jedem Sendekanal verknüpft ist;
ein Schnittstellen-Interruptidentifizierungsregister (512), das dem Sendesteuerblock verbunden ist;
ein Sendefrequenzwahlregister (514), das mit dem Sendesteuerblock verbunden ist;
ein Wartezählregister (516), das mit dem Sendesteuerblock verbunden ist;
ein Taktstoppzeitregister (518), das mit dem Sendesteuerblock verbunden ist;
ein Kanalkonfigurierungsregister (410), das mit jedem Sendekanal verbunden ist; und
ein Kanalstatusregister (412), das mit jedem Sendekanal verbunden ist.

5. Kommunikationsschnittstelle (112) nach Anspruch 3, wobei die mehreren Empfangssteuerregister (304) mindestens eins von folgenden umfassen:
ein Empfangs-FIFO-Register (600), das mit jedem Empfangskanal (310) verbunden ist;
ein Schnittstellenbreitenregister (520) zum Auswählen einer vorgegeben Zahl von Bits, die über die Kommunikationsschnittstelle vom Empfangssteuerblock (308) empfangen werden sollen;
ein Kanalstoppregister (604), das mit jedem Empfangskanal verknüpft ist;
ein Kanalstartregister (602), das mit jedem Empfangskanal verknüpft ist;
ein Weckregister (606), das mit mindestens einem Empfangskanal verknüpft ist;
ein Nachrichtenenderegister (508), das mit jedem Empfangskanal verknüpft ist;
ein Kanalkonfigurierungsregister (410), das mit jedem Empfangskanal verknüpft ist; und
ein Kanalstatusregister (412), das mit jedem Empfangskanal verknüpft ist.

6. Kommunikationsschnittstelle (112) nach Anspruch 1, wobei jeder der mehreren Sendekanäle (306) und jeder der mehreren Empfangskanäle (310) eine FIFO-Speichereinrichtung (314, 316) umfasst.

7. Kommunikationsschnittstelle (112) nach Anspruch 1, die ferner eine Leistungssteuereinheit (324) umfasst, die mit jedem der mehreren Sendekanäle (306) und Empfangskanäle (310) verbunden ist.

8. Kommunikationsschnittstelle (112) nach Anspruch 1, wobei der Sendesteuerblock (308) einen Kanalarbiter (320) umfasst, der zum Auswählen eines nächsten der mehreren Sendekanäle (306), der aktiviert werden soll, ausgelegt ist.

9. Kommunikationsschnittstelle (112) nach Anspruch 1, wobei der Sendesteuerblock (308) einen Verbindungscontroller (318) umfasst, der zum Senden von Daten aus einem ausgewählten Sendekanal (306) über eine ausgewählte Verbindung ausgelegt ist.

10. Kommunikationsschnittstelle (112) nach Anspruch 1, wobei der Empfangssteuerblock (312) eine Ablaufsteuereinheit (322) umfasst, die zur Speicherung einer aktuellen aktiven Kanalnummer, einer Zahl der Bits in einem aktuellen Byte, das gerade übertragen wird, und zum Schreiben jedes Bytes in einen ausgewählten Empfangskanal der mehreren Empfangskanäle (310) ausgelegt ist.

11. Kommunikationsschnittstelle (112) nach Anspruch 1, wobei die mehreren Sendekanäle (306) umfassen:
mindestens einen Kanal (1102), der zum Senden eines Taktsignals ausgelegt ist;
mindestens einen Kanal (1104), der zum Senden eines Freigabesignals ausgelegt ist;
mindestens einen Kanal (1106), der zum Senden eines Wartesignals ausgelegt ist;
und mindestens einen Kanal (1108), der zum Senden von Daten ausgelegt ist.

12. Kommunikationsschnittstelle (112) nach Anspruch 1, wobei die mehreren Empfangskanäle (310) umfassen:
mindestens einen Kanal (1110), der zum Senden eines Taktsignals ausgelegt ist;
mindestens einen Kanal (1112), der zum Senden eines Freigabesignals ausgelegt ist;
mindestens einen Kanal (1114), der zum Senden eines Wartesignals ausgelegt ist;
und mindestens einen Kanal (1108), der zum Senden von Daten ausgelegt ist.

13. Kommunikationsschnittstelle (112) nach Anspruch 1, wobei mindestens einer der mehreren Sendekanäle (306) und der mehreren Empfangskanäle (310) einen virtuellen Allzweck-Eingabe/Ausgabe-Kanal (307) umfassen.

14. Kommunikationsschnittstelle (112) nach Anspruch 1, ferner umfassend:
ein Kanalstoppschwellregister, das den Stoppschwellwert speichert, um zu bewirken, dass die Stoppmeldung an eine Quelle gesandt wird, wenn der ausgewählte Empfangskanal den Stoppschwellwert erreicht.
ein Startschwellregister, das den Startschwellwert speichert, um zu bewirken, dass die Startmeldung an eine Quelle gesandt wird, wenn der ausgewählte Empfangskanal den Startschwellwert erreicht.

15. Kommunikationsschnittstelle (112) nach Anspruch 1, die ferner mindestens einen aus einem Direktflusssteuermodus und einer Nachrichtenflusssteuerung zum Steuern eines Flusses von Daten durch die Kommunikationsschnittstelle umfasst.

16. Kommunikationsschnittstelle (112) nach Anspruch 1, wobei der Sendesteuerblock (308) umfasst:
einen Multiplexer, der mit den mehreren Sendekanälen verbunden ist;
einen Parallel-ein-Serien-aus-Umsetzer (PISO), der mit dem Multiplexer verbunden ist; und
einen Steuerschaltkreis, der mit dem Multiplexer und dem PISO verbunden ist und dafür ausgelegt ist, einen von den mehreren Sendekanälen zum Senden von Daten auszuwählen.

17. Kommunikationsschnittstelle (112) nach Anspruch 1, wobei der Empfangssteuerblock (312) umfasst:
einen Demultiplexer, der an die mehreren Empfangskanäle angeschlossen ist;
einen Serien-ein-Parallel-aus-Umsetzer (SIPO); und
eine Steuerschaltung, die an den Demultiplexer angeschlossen und dafür ausgelegt ist, einen der mehreren Empfangskanäle zum Empfangen von Daten auszuwählen.

18. Verfahren (1600) zum Senden von Daten zwischen Halbleiterchips, **gekennzeichnet durch**:
Schreiben (1602) von Daten in mindestens einen von mehreren Sende-FIFOs;
Auswählen (1604) von einem der mehreren Sende-FIFOs, der Daten enthält, die gesendet werden sollen, und der nicht in einem Wartezustand ist;
Übertragen (1612) der Daten in einen entsprechenden ausgewählten der mehreren Empfangs-FIFOs, der nicht voll oder in einem Wartezustand ist;
Senden (1616) einer Stoppmeldung, wenn der entsprechende der Empfangs-FIFOs einen Stoppschwellwert erreicht, wodurch der entsprechende der FIFOs in einen Wartezustand versetzt wird; und
Senden (1618) einer Startmeldung, wenn der entsprechende der Empfangs-FIFOs einen Startschwellwert erreicht, wodurch bewirkt wird, dass der entsprechende der Empfangs-FIFOs den Wartezustand verlässt.

19. Verfahren (1600) nach Anspruch 18, ferner umfassend:
Senden (1616) eines Wartesignals an einen Sendesteuerblock, wenn der entsprechende der Empfangs-FIFOs keine Daten empfangen kann; und
Entfernen (1618) des Wartesignals, wenn der entsprechende der Empfangs-FIFOs Daten empfangen kann.

20. Verfahren (1600) nach Anspruch 18, ferner umfassend das Auswählen (1620) eines weiteren der mehreren Sende-FIFOs zum Senden von Daten an einen weiteren der mehreren Empfangs-FIFOs, während der entsprechende der Empfangs-FIFOs keine Daten empfangen kann.

21. Verfahren (1600) nach Anspruch 18, ferner umfassend:
Senden (1606) eines Freigabesignals zum Initiieren einer Übertragung von Daten;
Senden (1608) einer ausgewählten Kanalnummer, über die die Daten gesendet werden wollen; und
Senden (1614) eines Nachrichtenendesignals, nachdem die Daten gesendet wurden.

22. Verfahren (1600) nach Anspruch 18, ferner umfassend:
Auswählen eines der mehreren Sende-FIFOs und des entsprechenden der mehreren Empfangs-FIFOs durch einen vorgegebenen Algorithmus.

23. Verfahren (1600) nach Anspruch 18, wobei der vorgegebene Algorithmus das zyklische Multiplexverfahren ist.

24. Verfahren (1600) nach Anspruch 18, das ferner das Auswählen einer Schnittstellenbreite aus Serienbreite, Zweibitbreite und Halbbytebreite umfasst.

## Revendications

1. Interface de communication (112) comprenant :
une interface bus (300) que l'on peut coupler à un bus (110) ;
une pluralité de canaux de transmission (306) couplés à l'interface bus ;
une pluralité de canaux de réception (310) couplés à l'interface bus ;
**caractérisée par** ce qu'elle comprend en outre :
un bloc de contrôle de transmission (308) couplé à la pluralité de canaux de transmission afin de sélectionner l'un des canaux de transmission qui contient des données et qui n'est pas en état d'attente pour transmettre les données ;
un bloc de contrôle de réception (312) couplé à la pluralité de canaux de réception afin de sélectionner l'un des canaux de réception qui n'est pas plein ou qui n'est pas dans un état d'attente pour recevoir des données ;
un canal de message d'arrêt couplé au bloc de contrôle de réception et adapté pour envoyer un message d'arrêt à une source lorsqu'un canal de réception sélectionné atteint une valeur de seuil d'arrêt, pour placer ainsi le canal de réception sélectionné dans un état d'attente ; et
un canal de message de départ couplé au bloc de contrôle de réception et adapté pour envoyer un message de départ à la source lorsque le canal de réception sélectionné atteint une valeur de seuil de départ, pour faire sortir ainsi de l'état d'attente le canal de réception sélectionné.

2. Interface de communication (112) selon la revendication 1, comprenant en outre un contrôleur d'accès direct à la mémoire couplé à l'interface bus.

3. Interface de communication (112) selon la revendication 1, dans laquelle l'interface bus (300) comprend une pluralité de registres de contrôle de transmission (302) et une pluralité de registres de contrôle de réception (304).

4. Interface de communication (112) selon la revendication 3, dans laquelle la pluralité de registres de contrôles de transmission (302) comprend au moins l'un de :
un registre de largeur d'interface (520) couplé au bloc de contrôle de transmission (308) ;
un registre premier entré premier sorti (PEPS/FIFO) de transmission (504) associé à chaque canal de transmission (306) ;
un registre de fin de message (EOM) (508) associé à chaque canal de transmission ;
un registre d'identification d'interruption d'interface (512) couplé au bloc de contrôle de transmission ;
un registre de sélection de fréquence de transmission (514) couplé au bloc de contrôle de transmission ;
un registre de compte d'attente (516) couplé au bloc de contrôle de transmission ;
un registre d'arrêt d'horloge (518) couplé au bloc de contrôle de transmission ;
un registre de configuration de canal (410) associé à chaque canal de transmission ; et
un registre d'état de canal (412) associé à chaque canal de transmission.

5. Interface de communication (112) selon la revendication 3, dans laquelle la pluralité de registres de contrôle de réception (304) comprend au moins l'un de :
un registre PEPS de réception (600) couplé à chaque canal de réception (310) ;
un registre de largeur d'interface (520) pour sélectionner un nombre prédéterminé de bits à recevoir via l'interface de communication par le bloc de contrôle de réception (308) ;
un registre d'arrêt de canal (604) associé à chaque canal de réception ;
un registre de départ de canal (602) associé à chaque canal de réception ;
un registre de réveil (606) associé à au moins un canal de réception ;
un registre de fin de message (508) associé à chaque canal de réception ;
un registre de configuration de canal (410) associé à chaque canal de réception ; et
un registré d'état de canal (412) associé à chaque canal de réception.

6. Interface de communication (112) selon la revendication 1, dans laquelle chacun de la pluralité de canaux de transmission (306) et chacun de la pluralité de canaux de réception (310) comprend un dispositif de mémoire premier entré premier sorti (PEPS/FIFO) (314, 316).

7. Interface de communication (112) selon la revendication 1, comprenant en outre une unité de gestion d'énergie (324) couplée à chacun de la pluralité de canaux de transmission (306) et de canaux de réception (310).

8. Interface de communication (112) selon la revendication 1, dans laquelle le bloc de contrôle de transmission (308) comprend un arbitre de canal (320) adapté pour sélectionner un canal suivant de la pluralité de canaux de transmission (306) à activer.

9. Interface de communication (112) selon la revendication 1, dans laquelle le bloc de contrôle de transmission (308) comprend un contrôleur de liaison (318) adapté pour transmettre des données depuis un canal de transmission sélectionné (306) via une liaison sélectionnée.

10. Interface de communication (112) selon la revendication 1, dans laquelle le bloc de contrôle de réception (312) comprend une machine d'état (322) adaptée pour stocker un numéro du canal actif courant, un nombre de bits dans un octet courant étant transféré et pour écrire chaque octet sur un sélectionné de la pluralité de canaux de réception (310).

11. Interface de communication (112) selon la revendication 1, dans laquelle la pluralité de canaux de transmission (306) comprend :
au moins un canal (1102) adapté pour envoyer un signal d'horloge ;
au moins un canal (1104) adapté pour envoyer un signal d'échantillonnage ;
au moins un canal (1106) adapté pour envoyer un signal d'attente ;
et au moins un canal (1108) adapté pour envoyer des données.

12. Interface de communication (112) selon la revendication 1, dans laquelle la pluralité de canaux de réception (310) comprend :
au moins un canal (1110) adapté pour envoyer un signal d'horloge ;
au moins un canal (1112) adapté pour envoyer un signal d'échantillonnage ;
au moins un canal (1114) adapté pour envoyer un signal d'attente ;
et au moins un canal (1116) adapté pour envoyer des données.

13. Interface de communication (112) selon la revendication 1, dans laquelle au moins l'un de la pluralité de canaux de transmission (306) et de la pluralité de canaux de réception (310) comprend un canal d'entrée/sortie universel virtuel (307).

14. Interface de communications (112) selon la revendication 1, comprenant en outre :
un registre de seuil d'arrêt de canal destiné à stocker la valeur de seuil d'arrêt afin d'envoyer le message d'arrêt à une source lorsque le canal de réception sélectionné atteint la valeur de seuil d'arrêt ; et
un registre de seuil de départ destiné à stocker la valeur de seuil de départ afin d'envoyer le message de départ à une source lorsque le canal de réception sélectionné atteint la valeur de seuil de départ.

15. Interface de communication (112) selon la revendication 1, comprenant en outre au moins l'un d'un mode de contrôle direct du flux et d'un contrôle du flux de messages pour contrôler un flux de données à travers l'interface de communication.

16. Interface de communication (112) selon la revendication 1, dans laquelle le bloc de contrôle de transmission (308) comprend :
un multiplexeur couplé à la pluralité de canaux de transmission ;
un convertisseur parallèle - série de sortie (PISO) couplé au multiplexeur ; et
un circuit de commande couplé au multiplexeur et au PISO et adapté pour sélectionner l'un de la pluralité de canaux de transmission pour transmettre des données.

17. Interface de communication (112) selon la revendication 1, dans laquelle le bloc de contrôle de réception (312) comprend :
un démultiplexeur couplé à la pluralité de canaux de réception ; un convertisseur parallèle - série de sortie (SIPO) ; et
un circuit de commande couplé au démultiplexeur et adapté pour sélectionner l'un de la pluralité de canaux de réception pour recevoir des données.

18. Procédé (1600) de transmission des données entre des puces semi-conductrices, **caractérisé par** :
l'écriture (1602) des données dans au moins l'un d'une pluralité de PEPS de transmission ;
la sélection (1604) de l'un de la pluralité de PEPS de transmission qui contient des données à transmettre et qui n'est pas en état d'attente ;
la transmission (1612) des données vers l'un sélectionné correspondant de la pluralité de PEPS de réception qui n'est pas plein ou qui n'est pas en état d'attente ;
l'envoi (1616) d'un message d'arrêt si l'un correspondant des PEPS de réception atteint une valeur de seuil d'arrêt, pour placer ainsi l'un correspondant des PEPS dans un état d'attente ; et
l'envoi (1618) d'un message de départ lorsque l'un correspondant des PEPS de réception atteint une valeur de seuil de départ, pour faire sortir ainsi de l'état d'attente l'un correspondant des PEPS de réception.

19. Procédé (1600) selon la revendication 18, comprenant en outre :
l'envoi (1616) d'un signal d'attente vers un bloc de contrôle de transmission si l'un correspondant des PEPS de réception ne peut pas recevoir des données ; et
la suppression (1618) du signal d'attente lorsque l'un correspondant des PEPS de réception peut recevoir des données.

20. Procédé (1600) selon la revendication 18, comprenant en outre la sélection (1620) d'un autre de la pluralité de PEPS de transmission pour envoyer des données vers un autre correspondant de la pluralité de PEPS de réception alors que l'un correspondant des PEPS de réception ne peut pas recevoir de données.

21. Procédé (1600) selon la revendication 18, comprenant en outre :
l'envoi (1606) d'un signal d'échantillonnage pour initier une transmission de données ;
l'envoi (1608) d'un numéro de canal sélectionné sur lequel les données doivent être transmises ; et
l'envoi (1614) d'un signal de fin de message après la transmission des données.

22. Procédé (1600) selon la revendication 18, comprenant en outre :
la sélection de l'un de la pluralité de PEPS de transmission et l'un correspondant de la pluralité de PEPS de réception par un algorithme prédéterminé.

23. Procédé (1600) selon la revendication 18, dans lequel l'algorithme prédéterminé est un algorithme par permutation circulaire.

24. Procédé (1600) selon la revendication 18, comprenant en outre la sélection d'une largeur d'interface depuis l'une d'une largeur en série, d'une largeur à deux bits et d'une largeur à quartet.
